# EUROPÄISCHE PATENTANMELDUNG

(11) **EP 4 220 386 A1**
(43) Veröffentlichungstag der Anmeldung: **02.08.2023**
(21) Anmeldenummer: 22154308.5
(22) Anmeldetag: 31.01.2022
(51) Int. Cl.: G06F 9/445, G06N 20/00, G05B 19/00

(54) **TECHNISCHES SYSTEM MIT CLOUD-DIENSTENUTZUNG**

(71) Anmelder: Siemens Aktiengesellschaft, 80333 München (DE)
(72) Erfinder: Becker, Stefan, 91325 Adelsdorf (DE); Birk, Gunther, 91054 Erlangen/Buckenhof (DE); Falk, Rainer, 85586 Poing (DE); Fries, Steffen, 85598 Baldham (DE); Greiten, Tobias, 91083 Baiersdorf (DE); Hoch, Maximilian, 91325 Adelsdorf (DE)
(74) Vertreter: Siemens Patent Attorneys

(57) **Zusammenfassung**

Die Erfindung betrifft Vorrichtungen und Verfahren zum Konfigurieren einer Steuereinrichtung für ein technisches System, bei dem durch das technische System zumindest ein Cloud-Dienst zumindest eines Cloud-Anbieters genutzt wird, durch einen jeweiligen ersten Betriebsparameter eine jeweilige Konfiguration des technischen Systems und/oder ein jeweiliges Verhalten des technischen Systems im Betrieb charakterisiert wird, und durch einen jeweiligen zweiten Betriebsparameter eine jeweilige Nutzung des zumindest einen Cloud-Dienstes durch das technische System (PROD) charakterisiert wird, zum Bereitstellen von zumindest einem Paar aufweisend den jeweiligen ersten Betriebsparameter und den jeweiligen zweiten Betriebsparameter für ein jeweiliges Zeitintervall, zum Bereitstellen eines Maschinenlernmoduls, das durch das zumindest eine Paar mit dem jeweiligen ersten Betriebsparameter als Eingabesignal des Maschinenlernmoduls und dem jeweiligen zweiten Betriebsparameter als Ausgabesignal des Maschinenlernmoduls trainiert ist, zum Ermitteln zumindest eines Vorhersagesignals für den zweiten Betriebsparameter eines weiteren Zeitintervalls als Ausgabesignal des Maschinenlernmoduls durch Vorgabe des ersten Betriebsparameters des weiteren Zeitintervalls als Eingabesignal des Maschinenlernmoduls und zum Konfigurieren der Steuereinrichtung derart, dass auf Basis des Vorhersagesignals ein Steuersignal der Steuereinrichtung zur Konfiguration des technischen Systems und/oder zum Steuern des Betriebs des technischen Systems erzeugt wird.

## Beschreibung

### Die Erfindung betrifft Verfahren, Vorrichtungen und Verwendung für ein technisches System mit Cloud-Dienstenutzung

Ein aktueller Trend zeigt, dass technische Systeme, wie Produktionsanlagen, Aufgaben in zunehmender Art und Weise in die Cloud auslagern. In die Cloud auslagern bedeutet, dass ein Cloud Provider seine Cloud-Dienste über ein Interface dem technischen System zur Nutzung zur Verfügung gestellt. Als Cloud-Dienste sind Backend-Cloud, Edge-Cloud-Infrastruktur oder auch Kommunikationsinfrastrukturen, wie private oder öffentliche 5G Mobilfunknetze mit einer Multi-Access-Edge-Computing-Funktionalität, zu verstehen. Dabei kann ein Cloud-Dienst beispielsweise eine Speicherung von Daten vorsehen oder unter Berücksichtigung verschiedener Eingangsparameter komplexe mathematische Auswertungen, wie beispielsweise eine Vorhersage einer Raumtemperatur in einem Gebäude, durchführen und ein ermitteltes Ergebnis bereitstellen.

Zur Konfiguration und/oder während des Betriebs des technischen Systems müssen einem Betreiber des technischen Systems verschiedenste Betriebsparameter bekannt sein, um die Konfiguration bzw. den Betrieb optimal steuern zu können. Jedoch gestaltet sich die Konfiguration bzw. der Betrieb von technischen Systemen, die Cloud-Dienste einsetzen, schwierig, da Betriebsparameter des jeweiligen Cloud-Dienstes nicht in der Hand des Betreibers sind oder zum Zeitpunkt der Konfiguration bzw. des Betriebs nicht sofort verfügbar sind. Hieraus ergibt sich ein Nachteil, dass technische Systeme, die Cloud-Dienste einsetzen, unter Umständen nicht optimal oder optimiert konfiguriert bzw. betrieben werden können.

Somit besteht eine Aufgabe der vorliegenden Erfindung darin, Verfahren, Vorrichtungen und Verwendungen anzugeben, mit denen ein technisches System, das Cloud-Dienste nutzt, in gegenüber dem Stand der Technik verbesserter Art und Weise konfiguriert bzw. betrieben werden kann.

Diese Aufgabe wird durch die unabhängigen Ansprüche gelöst. Weiterbildungen der Erfindung sind den abhängigen Ansprüchen zu entnehmen.

Die Erfindung betrifft ein computerimplementiertes Verfahren zum Konfigurieren einer Steuereinrichtung für ein technisches System, bei dem
- durch das technische System zumindest ein Cloud-Dienst zumindest eines Cloud-Anbieters genutzt wird,
- durch einen jeweiligen ersten Betriebsparameter eine jeweilige Konfiguration des technischen Systems und/oder ein jeweiliges Verhalten des technischen Systems im Betrieb charakterisiert wird, und
- durch einen jeweiligen zweiten Betriebsparameter eine jeweilige Nutzung des zumindest einen Cloud-Dienstes durch das technische System (PROD) charakterisiert wird,
mit folgenden Schritten:
a) Bereitstellen von zumindest einem Paar aufweisend den jeweiligen ersten Betriebsparameter und den jeweiligen zweiten Betriebsparameter für ein jeweiliges Zeitintervall;
b) Bereitstellen eines Maschinenlernmoduls, das durch das zumindest eine Paar mit dem jeweiligen ersten Betriebsparameter als Eingabesignal des Maschinenlernmoduls und dem jeweiligen zweiten Betriebsparameter als Ausgabesignal des Maschinenlernmoduls trainiert ist;
c) Ermitteln zumindest eines Vorhersagesignals für den zweiten Betriebsparameter eines weiteren Zeitintervalls als Ausgabesignal des Maschinenlernmoduls durch Vorgabe des ersten Betriebsparameters des weiteren Zeitintervalls als Eingabesignal des Maschinenlernmoduls;
d) Konfigurieren der Steuereinrichtung derart, dass auf Basis des Vorhersagesignals ein Steuersignal der Steuereinrichtung zur Konfiguration des technischen Systems und/oder zum Steuern des Betriebs des technischen Systems erzeugt wird.

Das Verfahren ermöglicht in vorteilhafter Weise, dass ein Konfigurieren bzw. ein Betrieb eines technischen Systems, das einen oder mehrere Cloud-Dienste nutzt, optimiert gesteuert werden kann.

Unter einem technischen System kann ein OT-System (OT - Operation Technology) verstanden werden, wie beispielsweise eine Automatisierungsanlage, eine Produktionsanlage, eine Gasturbine mit Steuerung, eine Heizungsanlage, eine Wasseraufbereitungsanlage, oder ein autonomer Transport- oder Putzroboter. Unter einem technischen System kann auch ein cyber-physisches System oder ein Internet-of-Things-System verstanden werden. Ferner kann unter dem Begriff technisches System auch eine Smart-Home Anlage oder ein selbstfahrendes Fahrzeug verstanden werden. Das technische System verfügt in der Regel über mehrere Einheiten, die über drahtgebundene oder drahtlose Kommunikationsverbindungen zum Austausch von Daten zumindest teilweise miteinander in Verbindung stehen. Dabei können eine oder mehrere Einheiten des technischen Systems einen oder mehrere Cloud-Dienste nutzen, um spezifische Aufgaben, wie beispielsweise eine Datenspeicherung oder eine Wartungsaufgabe zu lösen. Die genutzten Cloud-Dienste können auch durch mehr als einen Cloud-Provider bereitgestellt werden.

Ein Cloud-Dienst eines Cloud-Systems bezeichnet eine Nutzung von einer oder mehrerer Anwendungen, die ein Cloud-Anbieter, auch als Cloud-Provider bezeichnet, dem technischen System anbietet. Dies kann eine Datenspeicherung, aber auch ganze Funktionen eines OT-Systems betreffen, wie beispielsweise das Lösen von mathematischen Optimierungsproblemen, Services, wie Wetterdatenbereitstellung, oder eine Steuerung einer Einheit, beispielsweise einer PLC (PLC - Programmable Logic Controller) zum Betrieb eines Geräts, wie z.B. eines Transportbandes. Eine Referenz [1] gibt näher Informationen zum Stand der Technik.

Unter einem ersten Betriebsparameter des technischen Systems werden im Rahmen dieser Beschreibung ein oder mehrere Betriebsparameter verstanden, die das technische System bezüglich seiner Konfiguration und/oder bezüglich seines Verhaltens im Betrieb für oder während eines vorgebbaren Zeitintervalls, charakterisieren. Beispielsweise wird im Rahmen der Konfiguration eine Parametrierung eines oder mehrerer der Cloud-Dienste vorgenommen. Weiterhin kann im Rahmen der Konfiguration eine Zusammenstellung einer oder mehrerer Einheiten zur Bildung des technischen Systems erfolgen, wobei die konkrete Zusammenstellung einen Einfluss auf die Nutzung eines oder mehrerer Cloud-Dienste haben kann. Dies wird auch als Projektierung des technischen Systems bezeichnet. Ferner kann unter dem Begriff Konfiguration auch eine spezifische Parametrierung vorgegebener Einheiten des technischen Systems verstanden werden, wie beispielsweise welche Einheiten mit welchen Protokollen miteinander kommunizieren oder in welchen zeitlichen Abständen bestimmte Aufgaben, wie beispielsweise ein Archivieren von Daten, vorgenommen werden sollen. Neben der Konfiguration kann auch das Verhalten des technischen Systems im Betrieb für bzw. während des jeweiligen Zeitintervalls durch einen jeweiligen ersten Parameter charakterisiert werden. Beispielsweise wird in dem Zeitintervall von 1 Minute ein bestimmter Cloud-Dienst zehnmal aufgerufen und einem anderen Cloud-Dienst wird innerhalb dieses Zeitintervalls ein Datenvolumen von 50 MB übermittelt. Somit beschreibt der erste Betriebsparameter im Betrieb das dynamische Verhalten des technischen Systems.

Das Bereitstellen des zumindest einen ersten Betriebsparameters kann durch Messen von Werten im Betrieb des technischen Systems, wie beispielsweise Temperatur oder Umdrehungszahl eines Motors, durch Auslesen von Konfigurationsparametern, wie genutzte Kommunikationsprotokolle oder Häufigkeit eines Cloud-Dienstaufrufs, und/oder durch Analysieren von Zuständen im laufenden Betrieb, wie beispielsweise durchschnittlicher Füllstand eines Ausgangspuffers, minimaler und maximaler Füllstand des Ausgangspuffers, real erreichbare Datenübertragung zwischen zwei Kommunikationspartnern oder Datenmenge, die pro Zeiteinheit durchschnittlich übertragen wird, ausgebildet sein.

Der zumindest eine zweite Betriebsparameter betrifft eine konkrete Nutzung des zumindest einen Cloud-Dienstes innerhalb des Zeitintervalls. So kann der zweite Betriebsparameter für einen Cloud-Dienst eine Anzahl an Anfragen durch eine oder mehrere Einheiten des technischen Systems repräsentieren.

Ferner kann der zweite Betriebsparameter auch eine Auslastung einer Cloud-Plattform beschreiben, wie beispielsweise einen Speicherbedarf oder eine Auslastung eines Rechenwerks (CPU). Somit gibt der zweite Betriebsparameter technische Kenngrößen bei der Benutzung eines oder mehrerer Cloud-Dienste an.

Das Bereitstellen des zumindest einen zweiten Betriebsparameters kann durch Ermitteln eines jeweiligen zweiten Betriebsparameters auf Seite des technischen Systems erfolgen, beispielsweise Ermitteln einer Reaktionszeit zwischen Anforderung eines Cloud-Dienstes und Übermittlung eines angeforderten Steuerwerts, und/oder durch Übermitteln einer Protokollnachricht oder Protokolldatei, die beispielsweise für das Zeitintervall von jeweils 1 Minute zweite Betriebsparameter vorgibt durch den Cloud-Anbieter. Das Bereitstellen des zumindest einen zweiten Betriebsparameters kann auch aus mehreren Quellen stammen, d.h. durch eine Kombination von bereitgestellten zweiten Betriebsparametern ermittelt auf Seite des technischen Systems, bzw. durch das technische System, und den zumindest einen Cloud-Dienst und/oder den zumindest einen Cloud-Anbieter.

Das Maschinenlernmodul lernt anhand von ersten und zweiten Betriebsparametern, die unter anderem zumindest eine technische Kenngröße des technischen Systems bzw. des Cloud-Dienstes repräsentieren. Erste und zweite Betriebsparameter eines jeweiligen Zeitintervalls werden in einem jeweiligen Paar zusammengefasst. Nach einer Trainingsphase mit diesen Paaren kann für eine Vorgabe zumindest eines spezifischen ersten Betriebsparameters des weiteren Zeitintervalls zumindest ein Vorhersagesignal für den zumindest zweiten Betriebsparameter mittels des trainierten Maschinenlernmoduls ermittelt werden. Dieses Maschinenlernmodul kann beispielsweise durch ein neuronales Netz gebildet werden. Das Maschinenlernmodul kann zu einem einzigen Zeitpunkt die Trainingsphase durchlaufen. Es kann auch während des Lebenszyklus des technischen Systems von Zeit zu Zeit neu trainiert oder das bereits trainierte durch weitere Paare an ersten und zweiten Betriebsparametern jeweiliger Zeitintervalle verbessert werden. Insbesondere kann zum Durchführen des computerimplementierten Verfahrens auf ein trainierte Maschinenlernmodul zurückgegriffen werden, wobei das Training vor Durchführen der Ermittlung des Vorhersagesignals abgeschlossen sein kann, beispielsweise vor einigen Stunden oder Tagen. Das Vorhersagesignal stellt ein Ausgangssignal des (trainierten) Maschinenmoduls dar, das aufgrund der Vorgabe des zumindest einen ersten Betriebsparameters als Eingabesignal des (trainierten) Maschinenlernmoduls erzeugt wird. Im Folgenden wird unter einem Begriff Maschinenlernmodul ein trainiertes Maschinenlernmodul verstanden.

Die Steuereinrichtung nutzt das Maschinenlernmodul, um beispielsweise für eine vorgegebene Konfiguration des technischen Systems basierend auf den zumindest ersten Betriebsparametern das zumindest eine Vorhersagesignal für den zumindest einen zweiten Betriebsparameter zu ermitteln und hierdurch ein Steuersignal zu erzeugen. Hierbei kann mithilfe des zumindest einen Vorhersagesignals ermittelt werden, welcher von mehreren möglichen Cloud-Anbietern für eine bestimmte Funktionalität, zur Verfügung gestellt durch einen spezifischen Cloud-Dienst, eine optimierte Nutzung für einen späteren Betrieb des technischen Systems erzielt werden kann. Beispielsweise liegt die optimierte Nutzung in einer Reaktionszeit, die bei Anfrage über den spezifischen Cloud-Dienst durch einen der Cloud-Anbieter bereitgestellt wird und eine vorgegebene Reaktionszeit nicht überschreiten darf. Auch kann eine optimierte Nutzung in einem minimalen elektrischen Energieverbrauch oder einem minimalen CO2 Ausstoß, verursacht durch die verbrauchte elektrische Energie, verstanden werden.

Ferner kann die Steuereinrichtung auch für einen weiteren ersten Betriebsparameter, der das Verhalten des technischen Systems im Betrieb innerhalb eines weiteren Zeitintervalls charakterisiert, mithilfe des Maschinenlernmoduls, das zumindest eine Vorhersagesignal für den zumindest einen zweiten Betriebsparameter ermitteln und hieraus das Steuersignal erzeugen. Beispielsweise zeigt sich im Betrieb des technischen Systems, das pro Zeitintervall 100 MB an Daten zum Archivieren an einen Cloud-Dienst eines ersten Cloud-Anbieters verschickt werden. Da die Übertragungszeit für die 100 MB bei diesem ersten Cloud-Anbieter signifikant höher ist als bei Nutzung eines äquivalenten Cloud-Dienstes bei einem zweiten Cloud-Anbieter, kann das Steuersignal im Betrieb eine Änderung des Cloud-Anbieters zur Archivierung der Daten veranlassen. Somit kann das Steuersignal auf Basis des zumindest einen Vorhersagesignals, welches mittels des trainierten Maschinenlernmoduls erzeugt wird, eine Optimierung der Konfiguration bzw. eines Betriebsverhaltens des technischen Systems ermöglichen. Das Maschinenlernmodul wird mit den einen oder den mehreren Paaren trainiert, wobei sich die Paare auf jeweilige Zeitintervalle beziehen. Das weitere Zeitintervall kann ein von den jeweiligen Zeitintervallen unterschiedliches Zeitintervall sein.

In einer vorteilhaften Weiterbildung des computerimplementierten Verfahrens wird zumindest einer der jeweiligen ersten Betriebsparameter zumindest gemäß einer der folgenden Ausführungen bereitgestellt:
- Zumindest ein Projektierungsparameter des technischen Systems, der eine Projektierung des technischen Systems charakterisiert;
- Zumindest ein Konfigurationsparameter des zumindest einen Cloud-Dienstes, der eine Parametrierung des zumindest einen Cloud-Dienstes charakterisiert;
- Zumindest ein Zustandsparameter, der einen Zustand zumindest eines Teils von zumindest einer Einheit des technischen Systems während eines Betriebs des technischen Systems bereitgestellt;
- Zumindest ein Betriebsparameter, der zumindest einen von mehreren Zuständen des Betriebs des technischen Systems anzeigt;
- Zumindest ein Netzwerkparameter, der zumindest einen technischen Parameter zumindest einer Netzwerkkommunikation, insbesondere zwischen dem technischen System und dem zumindest einen Cloud-Dienst oder dem zumindest einen Cloud-Anbieter, anzeigt.

Mithilfe einer oder mehrerer der genannten Ausführungen kann der zumindest eine erste Betriebsparameter derart konkretisiert werden, dass dieser / diese in optimierter Art und Weise das technische System charakterisieren kann, wodurch das Trainieren des Maschinenlernmoduls zu sehr guten Vorhersagesignalen führen kann.

Im Rahmen dieser Beschreibung wird unter einem Projektierungsparameter ein oder mehrere Parameter verstanden, die eine Projektierung des technischen Systems charakterisieren und/oder eine Umsetzung einer Projektierung des technischen Systems steuern. Unter Projektierung wird ein Vorgang verstanden, bei dem eine oder mehrere Einheiten ausgewählt und deren Zusammenwirkung und/oder Programmierung zur Bildung des technischen Systems bestimmt werden, sodass das technische System im Zusammenwirken mit zumindest einem Cloud-Dienst eine technische Aufgabe, wie bspw. ein Fertigungsschritt für ein Teilprodukt, oder eine Steuerung einer Maschine, wie z.B. eine Lüftungsanlage, realisieren und ausführen kann. Der Projektierungsparameter kann dabei bspw. die Auswahl der Elemente steuern, sowie bei der Umsetzung der Projektierung, z.B. welche Algorithmen auf den einzelnen Elementen ausgeführt oder welche Kommunikationsprotokolle zum Austausch von Daten mit dem Cloud-Dienst, eingesetzt werden sollen.

Der Konfigurationsparameter des zumindest einen Cloud-Dienstes definiert, in welcher Art und Weise das technische System, bzw. eines seiner Einheiten, den jeweiligen Cloud-Dienst nutzt. Beispielsweise kann der Konfigurationsparameter bei einem Speicher Cloud-Dienst angeben, in welchem Paketgrößen oder in welchen zeitlichen Abständen Daten zum Speichern von dem technischen System an den Cloud-Dienst übermittelt werden.

Der Zustandsparameter beschreibt zumindest einen Zustand zumindest eines Teils eines der Einheiten des technischen Systems. Beispielsweise kann ein Förderband die Zustände "im Betrieb", "bereit für den Betrieb", "in Wartung" oder "defekt" aufweisen. Ferner kann unter einem Zustand auch ein Zustand innerhalb einer Einheit verstanden werden, wie beispielsweise ein Füllstand einer Nachrichtenwarteschlange oder eines Behälters für Flüssigkeiten, eine Anzahl von Aufrufen eines spezifischen Cloud-Dienstes pro Zeiteinheit oder auch eine Temperatur eines physikalischen Gerätes der Einheit.

Der Betriebsparameter beschreibt zumindest einen von mehreren Zuständen des Betriebs des technischen Systems, wie beispielsweise spezifische Produktionsschritte, geplante Produktionsschritte, eine Rezeptur bei einer Herstellung einer Flüssigkeit oder auch einen Gesamtzustand des technischen Systems, wie "im Betrieb", "bereit für den Betrieb", "in Wartung" oder "defekt".

Unter dem Netzwerkparameter werden ein oder mehrere Werte verstanden, die eine Netzwerkkommunikation näher charakterisieren, wie beispielsweise zwischen dem technischen System bzw. einem seiner Einheiten, und dem Cloud-Dienst bzw. dem Cloud-Anbieter. Hierbei beschreibt der Netzwerkparameter beispielsweise eine übertragene Datenmenge pro Zeiteinheit, eine Fehlerrate bei der Übertragung, ein verwendetes Kommunikationsprotokoll, Konfigurationsparameter eines Kommunikationsprotokolls, wie bspw. eine maximale Paketlänge oder eine maximale Wiederholungsrate, oder auch eine Latenzzeit zum Übertragen größerer Datenmengen.

In einer Weiterbildung des computerimplementierten Verfahrens wird zumindest einer der jeweiligen zweiten Betriebsparameter zumindest gemäß einer der folgenden Ausführungen bereitgestellt:
- Übertragenes Datenvolumen zwischen dem technischen System und dem zumindest einen Cloud-Dienst oder dem zumindest einen Cloud-Anbieter;
- Reaktionszeit zwischen Anfrage bei zumindest einem der Cloud-Dienste durch das technische System und Antwort durch den Cloud-Dienst;
- Anzahl an gestellten Anfragen an einen oder mehrere der Cloud-Dienste insgesamt oder pro Zeiteinheit;
- Rechenleistung auf Seiten des Cloud-Anbieters, insbesondere CPU-Last, Auslastung eines Arbeitsspeichers und/oder Auslastung einer virtualisierten Datenbank oder virtualisierten Festplatte,
- Energieverbrauch, insbesondere elektrischer Energieverbrauch, oder CO2-Ausstoß verursacht durch die Nutzung des zumindest einen Cloud-Dienstes durch das technische System.

Durch die eine oder die mehreren der Ausführungen des zumindest einen zweiten Betriebsparameters kann die Nutzung von zumindest einem Cloud-Dienst durch das technische System zur Ermittlung des zumindest einen Vorhersagesignals in vorteilhafter Weise durchgeführt werden.

Das übertragene Datenvolumen zwischen dem technischen System, bzw. einer Einheit des technischen Systems, und dem Cloud-Dienst bzw. dem Cloud-Anbieter kann in Megabyte pro Zeiteinheit, beispielsweise in 50 MB pro 1 Stunde, angegeben werden.

Eine Reaktionszeit zwischen einer Anfrage einer der Cloud-Dienste durch das technische System und einer Antwort durch diesen Cloud-Dienst des Cloud-Anbieters kann beispielsweise in Millisekunden angegeben werden. Der Einsatz der Reaktionszeit ist vorteilhaft, weil Anforderungen des technischen Systems bei dessen Betrieb vorliegen können, die eine maximale Reaktionszeit von dem Cloud-Dienst fordern. Durch die Bereitstellung dieser Information in Form des zweiten Betriebsparameters ist die Steuereinrichtung in der Lage das Steuersignal zur Konfiguration des technischen Systems oder auch zum Betrieb des technischen Systems in geeigneter Weise zu steuern.

Eine Anzahl an gestellten Anfragen an einen der oder mehrere der Cloud-Dienste beschreibt ein Nutzungsverhalten des technischen Systems, welches beispielsweise bei einer Bestimmung eines Cloud-Anbieters aus einer Vielzahl von Cloud-Anbietern, der den Cloud-Dienst in einer für das technische System optimierten und/oder ggfs. optimalen Art und Weise anbietet, relevant sein kann.

Auch eine Rechenleistung auf Seiten des Cloud-Anbieters, wie CPU-Last, Auslastung eines Arbeitsspeichers und/oder Auslastung einer virtualisierten Datenbank oder virtualisierten Festplatte, kann eine Auswahl des Cloud-Anbieters aus einer Vielzahl von Cloud-Anbietern beeinflussen. Beispielsweise schränkt ein Cloud-Anbieter eine Nutzung bei Überschreiten einer Rechenleistung ein, wodurch eine Performanz beim Betrieb des technischen Systems beeinträchtigt werden kann.

Ferner kann durch Angabe des Energieverbrauchs die Konfiguration der Steuereinrichtung beeinflusst werden. Möchte der Betreiber des technischen Systems sein technisches System möglichst umweltfreundlich konfigurieren so kann mit Hilfe des Energieverbrauchs, z.B. ausgestaltet als elektrischer Energieverbrauch, oder des CO2-Ausstoßes der Betrieb des technischen Systems optimiert werden.

In einer vorzugsweisen Weiterbildung des computerimplementierten Verfahrens werden ein oder mehrere der zweiten Betriebsparameter durch den zumindest einen Cloud-Anbieter in vorgebbaren zeitlichen Abständen bereitgestellt. Insbesondere ist der vorgebbare zeitliche Abstand identisch zum Wert des Zeitintervalls. Durch die Weiterbildung kann das Maschinenlernmodul zeitnah Abweichungen zwischen dem zumindest einen Vorhersagesignal für den zumindest einen zweiten Betriebsparameter und dem zumindest einen zweiten Betriebsparameter erkennen und hierdurch das Maschinenlernmodul optimieren. Somit lässt sich durch diese Weiterbildung eine Genauigkeit des zumindest einen Vorhersagesignal für ein zukünftiges Zeitintervall verbessern. Zudem kann die Angabe des zumindest einen zweiten Betriebsparameters durch den zumindest einen zweiten Cloud-Anbieter vorzugsweise in einer maschinenlesbaren Form ausgebildet sein. Hiermit kann eine maschinelle Verarbeitung für die Optimierung des Maschinenlernmoduls in einfacher und effizienter Art und Weise verbessert werden.

In einer vorzugsweisen Weiterbildung des computerimplementierten Verfahrens kann das zumindest eine Vorhersagesignal mehrdimensional ausgestaltet sein und einen oder mehrere der zweiten Betriebsparameter aufweisen.

Hierdurch wird ermöglicht, dass das Vorhersagesignal an die zweiten Betriebsparameter, die von dem Cloud-Anbieter in bestimmten Zeitintervallen übermittelt werden können, derart vergleichbar ist, dass ein Vergleich zwischen dem Vorhersagesignal und den "realen" zweiten Betriebsparametern in einfacher Art und Weise von statten gehen kann.

In einer vorzugsweisen Weiterbildung des computerimplementierten Verfahrens kann auf Basis des zumindest einen Vorhersagesignals ein Nutzungswert bereitgestellt werden, der durch eine gewichtete Verknüpfung, insbesondere als Summation, einzelner Parameter des Vorhersagesignals erzeugt wird.

Hierdurch kann jeweils für mehrere der zweiten Betriebsparameter eine jeweilige Kenngröße in Form des jeweiligen Nutzungswertes erstellt werden, die sich beispielsweise für verschiedene Projektierungen des technischen Systems ermitteln und in einfacher Art und Weise vergleichen lassen. Zudem kann durch die Gewichtung erreicht werden, dass spezifische Parameter des Vorhersagesignals, die besonders wichtig, beispielsweise für einen fehlerfreien Betrieb des technischen Systems oder für einen Quality of Service des technischen Systems sind, eine hohe Bedeutung bei der Bildung des nutzungswertes beigemessen werden. Die Parameter geben die Dimensionen des jeweiligen Vorhersagesignals wieder.

Zudem kann das Vorhersagesignal auch eine Auslastung des zumindest einen Cloud-Dienstes verursacht durch den ersten Betriebsparameter während des weiteren Zeitintervalls abschätzen, wobei die Auslastung beispielsweise mittels zumindest eines Wertes eine Speicherauslastung, eine CPU Auslastung, einen CO2 Verbrauch oder auch Kosten zum Durchführen des zumindest einen Cloud-Dienstes bspw. in Euro oder US Dollar wiedergibt.

Ferner kann in einer weiteren vorzugsweisen Weiterbildung der Erfindung für den jeweiligen Cloud-Anbieter ein jeweiliges Maschinenlernmodul trainiert oder das Maschinenlernmodul für mehrere Cloud-Anbieter (CA1, CA2) trainiert werden.

Durch die Verwendung eines einzigen Maschinenlernmoduls kann ein Implementierungsaufwand des Verfahrens geringgehalten werden. Durch Verwendung eines jeweiligen Maschinenlernmoduls kann eine Nutzung des Verfahrens vereinfacht werden, weil beispielsweise ein Trainieren des jeweiligen Maschinenlernmoduls je Cloud-Anbieter bzw. Cloud-Dienst erfolgen kann - beispielsweise auch durch ein anderes technisches System.

Zudem kann das computerimplementierte Verfahren vorzugsweise dadurch weitergebildet werden, dass durch die Steuereinrichtung für mehrere verschiedene erste Betriebsparameter das jeweilige Vorhersagesignal ermittelt und mittels einer Auswahlvorschrift, die das jeweilige Vorhersagensignal berücksichtigt, insbesondere bei einem Unter- oder Überschreiten einer Schwelle für das jeweilige Vorhersagesignal, das Steuersignal gebildet werden.

Hierdurch kann die Steuereinrichtung das Steuersignal zuverlässig auf Basis der Vorhersagesignale bilden. Zudem kann im Rahmen der Auswahlvorschrift auch eine Bewertung einzelner Dimensionen, auch als Parameter bezeichnet, desjeweiligen Vorhersagesignals, z.B. auf deren Relevanz für eine Performance bei Ausführen des technischen Systems, wie bspw. eine Latenzzeit bei einer Datenübertragung, durchgeführt werden. Die Schwelle kann zum Bewerten der Relevanz eingesetzt werden. So können auch mehrere bewertete Parameter mittels einer Verknüpfung zu einem Nutzungswert pro Vorhersagesignal zusammengefasst werden, wobei im Rahmen der Auswahlvorschrift dann die jeweiligen Nutzungswerte verglichen und einer der Nutzungswerte ausgewählt wird. Der ausgewählte Nutzungswert wird dann zur Erstellung des Steuersignal verwendet. So kann das Steuersignal denjenigen ersten Betriebsparameter zur Konfiguration des technischen Systems einsetzen, für den das dazugehörige Vorhersagesignal, bspw. mittels des Nutzungswertes, durch die Steuereinrichtung ausgewählt wurde.

Hierdurch kann in einer vorzugsweisen Weiterbildung des computerimplementierten Verfahrens eines der jeweiligen Vorhersagesignale ausgewählt und das Steuersignal auf Basis des zu dem ausgewählten Vorhersagesignal gehörenden ersten Betriebsparameters gebildet werden. Insbesondere die Verwendung des ausgewählten ersten Betriebsparameters als Steuersignal stellt eine Umsetzung des Verfahrens in einfacher und wenig komplexerer Art und Weise da.

Die Erfindung betrifft auch eine Vorrichtung zum Konfigurieren einer Steuereinrichtung für ein technisches System, bei dem
- durch das technische System zumindest ein Cloud-Dienst zumindest eines Cloud-Anbieters genutzt wird,
- durch einen jeweiligen ersten Betriebsparameter eine jeweilige Konfiguration des technischen Systems und/oder ein jeweiliges Verhalten des technischen Systems im Betrieb charakterisiert wird, und
- durch einen jeweiligen zweiten Betriebsparameter eine jeweilige Nutzung des zumindest einen Cloud-Dienstes durch das technische System charakterisiert wird,
mit folgenden Einheiten:
a) Bereitstelleinheit zum Bereitstellen von zumindest einem Paar aufweisend den jeweiligen ersten Betriebsparameter und den jeweiligen zweiten Betriebsparameter für ein jeweiliges Zeitintervall;
b) Maschinenlernmodul, das durch das zumindest eine Paar mit dem jeweiligen ersten Betriebsparameter als Eingabesignal des Maschinenlernmoduls und dem jeweiligen zweiten Betriebsparameter als Ausgabesignal des Maschinenlernmoduls trainiert ist;
c) Ermittlungseinheit zum Ermitteln zumindest eines Vorhersagesignals für den zweiten Betriebsparameter eines weiteren Zeitintervalls als Ausgabesignal des Maschinenlernmoduls durch Vorgabe des ersten Betriebsparameters des weiteren Zeitintervalls als Eingabesignal des Maschinenlernmoduls;
d) Steuereinrichtung, das derart konfiguriert ist, dass auf Basis des Vorhersagesignals ein Steuersignal der Steuereinrichtung zur Konfiguration des technischen Systems und/oder zum Steuern des Betriebs des technischen Systems erzeugbar ist.

Die Vorrichtung weist dieselben Vorteile wie das bzw. die korrespondierenden Schritte des computerimplementierten Verfahrens auf.

Ferner kann die Vorrichtung eine weitere Einheit aufweisen, die dazu eingerichtet ist, zumindest einen der Schritte der Weiterbildungen des computerimplementierten Verfahrens zu implementieren und auszuführen. Diese Weiterbildung der Vorrichtung weist dieselben Vorteile wie das korrespondierende Verfahren auf.

Eine jeweilige Vorrichtungseinheit, wie die Bereitstelleinheit, die Ermittlungseinheit, die weitere Einheit, die Steuereinrichtung und das Maschinenlernmodul können in Software, Hardware oder in einer Kombination aus Soft- und Hardware ausgebildet sein. Die jeweilige Vorrichtungseinheit kann einen Prozessor mit angekoppeltem Speicher ausweisen, wobei der Speicher maschinenlesbare Befehle aufweisen kann, die vom Prozessor eingelesen und abgearbeitet werden, um die einzelnen Schritte der Erfindung zu implementieren und realisieren. Ferner kann eine oder mehrere der Vorrichtungseinheiten über Ein- und/oder Ausgabemodule aufweisen, mit denen Daten zwischen den jeweiligen Vorrichtungseinheiten, zwischen einer jeweiligen Vorrichtungseinheit und einer jeweiligen Einheit des technischen System und/oder zwischen einer jeweiligen Vorrichtungseinheit und zumindest einem Cloud-Dienst und/oder einem Cloud-Anbieter ausgetauscht werden können, beispielsweise auf Basis eine paketorientierten Protokolls nach einem IP Standard (IP - Internet Protocol).

Schließlich betrifft die Erfindung auch eines Verwendung des computerimplementierten Verfahrens, bei dem mit Hilfe des computerimplementierten Verfahrens eine Optimierung des technischen Systems bei seiner Konfiguration und/oder während seines Betriebs in Bezug auf (i) eine Auslastung einzelner Einheiten des technischen Systems, (ii) eine Nutzung einzelner oder mehrerer Cloud-Dienste durch das technische System und/oder (iii) einen Wechsel eines einzelnen Cloud-Dienstes von einem ersten Cloud-Anbieter auf einen zweiten Cloud-Anbieter durchführbar ist.

Die Verwendung zeigt den Vorteil, dass das computerimplementierte Verfahren in dem technischen System eine Optimierung veranlassen kann. Weitere Vorteile bei der Verwendung des computerimplementierten Verfahrens sind den Weiterbildungen des computerimplementierten Verfahrens zu entnehmen.

Die Erfindung und ihre Weiterbildungen werden anhand von Figuren näher erläutert. Im Einzelnen zeigen:
- Figur 1:: Ausführungsbeispiel des Verfahrens für eine Produktionsanlage
- Figur 2:: Beispiel für eine Trainingsphase eines Maschinenlernmoduls
- Figur 3:: Ablaufdiagramm des Verfahrens
- Figur 4:: Vorrichtung mit mehreren Vorrichtungseinheiten

Elemente mit identischer Funktion und Wirkungsweise sind in den Figuren mit denselben Bezugszeichen versehen.

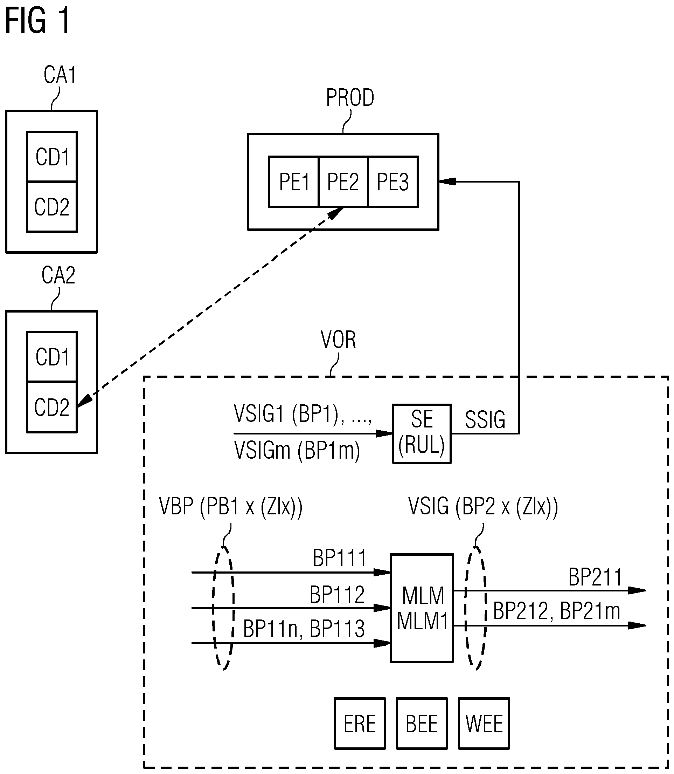

Im einem ersten Ausführungsbeispiel gemäß Figur 1 soll eine Projektierung eines technischen Systems PROD, im Beispiel eine Förderanlage, in optimierter Weise erfolgen. Die Förderanlage umfasst drei Produktionseinheiten PE1, PE2, PE3. Die erste Produktionseinheit PE1 ist ein Roboter, der ein Werkstück mit seinem Greifarm aufnimmt und auf ein Transportband legt. Das Transportband wird durch die zweite Produktionseinheit PE2 repräsentiert. Die dritte Produktionseinheit PE3 zeigt einen weiteren Roboter, der das Werkstück vom Transportband übernimmt und an einen nachfolgenden Produktionsschritt übergibt.

Das Förderband initiiert jede Minute einen Datentransfer zum Archivieren von Messdaten, wie eine Temperatur des Motors. Diese Messdaten sollen auf einem Cloud-Speicher archiviert werden. Hierzu kann das Förderband einen Cloud-Dienst CD1 Cloudspeicher eines Cloud-Anbieters CA1, CA2 nutzen. Es stehen zwei Cloud-Anbieter zur Auswahl. Diese Auswahl kann anhand eines (trainierten) Maschinenlernmoduls MLM in optimierter Weise erfolgen. Dazu wird eine Vorgabe für den ersten Betriebsparameter BP111,...,BP1n, beispielsweise als dreidimensionaler Vektor wie nachfolgend gezeigt, erstellt:

### Erste Betriebs- Wert Erläuterung

| Parameter | | |
|---|---|---|
| BP111 | 5 | Anzahl an Aufrufen des Cloud-Dienstes Cloudspeicher pro Zeiteinheit |
| BP112 | 75 | Erwartete Datenmenge in kByte pro Aufruf |
| BP113, BI11n | 5 | Zeitintervall ZI beschreibt einen Zeitraum in Minuten |

Dieser erste Betriebsparameter wird dem (trainierten) Maschinenlernmodul als Vorgabesignal VBP1 zugeführt. Falls nur ein Maschinenlernmodul verwendet wird, kann als weiterer erster Betriebsparameter noch eine Angabe zum jeweiligen Cloud-Anbieter übergeben werden. Falls pro Cloud-Anbieter ein spezifisches Maschinenlernmodul existiert, ist die Zuordnung zum jeweiligen Cloud-Anbieter explizit gegeben.

Das zumindest eine Vorhersagesignal VSIG beschreibt einen zweiten Betriebsparameter BP21 in einer oder mehreren Dimensionen BP211, ... BP21m, die durch das Maschinenlernmodul auf Basis des Vorgabesignals VBP1 des ersten Betriebsparameters prognostiziert werden. Als zweiter Betriebsparameter werden in diesem Beispiel folgende Parameter ermittelt:

| Zweiter Betriebs-Parameter mit | Erläuterung |
|---|---|
| BP211 | Übertragungszeit pro kB pro Sekunde |
| BP212, BP21m | Reaktionszeit zwischen Anfrage und Start einer Übertragung von Messdaten in Millisekunden |

Für den ersten Cloud-Anbieter liefert das Maschinenlernmodul als Vorhersagesignal folgende Angaben für den prognostizierten zweiten Betriebsparameter:

| Zweiter Betriebsparameter | Wert |
|---|---|
| BP211 | 5 (kByte/s) |
| BK212 | 125 (ms) |

Für den zweiten Cloud-Anbieter liefert das Maschinenlernmodul als Vorhersagesignal folgende Angaben für den prognostizierten zweiten Betriebsparameter:

| Zweiter Betriebsparameter | Wert |
|---|---|
| BP211 | 50 (kByte/s) |
| BP212 | 250 (ms) |

Somit liefert das Maschinenlernmodul Informationen zur Nutzung des Cloud-Dienstes Cloudspeicher für den jeweiligen Cloud-Anbieter. Hieraus kann ein jeweiliger Nutzungswert pro Cloud-Anbieter ermittelt werden. Beispielsweise werden die jeweiligen Werte des zweiten Betriebsparameters, d.h. des jeweiligen Vorhersagesignals, über eine gewichtete Summation zu einem Nutzungswert verdichtet. Dabei werden die Informationen des jeweiligen zweiten Betriebsparameter folgendermaßen summativ gewichtet verknüpft:

| Information des zweiten Betriebsparameters | |
|---|---|
| | Gewichtungsvorschrift |
| BP211 | Multiplikation von BP211 mit 2 |
| BP212 | 5000 geteilt durch BP212 |

Somit ergibt sich ein Nutzungswert je Cloud-Anbieter in folgender Art und Weise:

| Cloud-Anbieter | Nutzungswert |
|---|---|
| CA1 | NW = 2*5 + 5000/125 = 50 |
| CA2 | NW = 2*50 + 5000/250 = 120 |

Somit ist der Nutzungswert NW des ersten Cloud-Anbieters kleiner als der Nutzungswert des zweiten Cloud-Anbieters. Der erste Cloud-Anbieter ermöglicht zwar eine deutlich schnellere Reaktionszeit 125ms gegenüber 250ms, jedoch seine Übertragungszeit für ein kByte pro Sekunde ist deutlich langsamer als beim zweiten Cloud-Anbieter. Daher ist der Nutzungswert des zweiten Cloud-Anbieters für die Projektierung des Förderbandes höher.

Eine Steuereinrichtung SE kann als Zwischenschritt die oben gezeigten Nutzungswerte berechnen und dann durch Schwellwertbildung den Nutzungswert für den zweiten Cloud-Anbieter dahingehend auswählen, dass ein Steuersignal SSIG erzeugt wird, welches zur Konfiguration der Förderanlage, während der Projektierung der Förderanlage anzeigt, dass die Speicherung der Messdaten der zweiten Produktionseinheit mittels des Cloud-Dienstes des zweiten Cloud-Anbieters erfolgen soll.

Der jeweilige Nutzungswert je weiterem Zeitintervall ermöglicht unter anderem eine kompakte Aussage bei Vorliegen eines einzelnen oder mehrerer zweiter Betriebsparameter. Mit dem Nutzungswert kann eine Ermittlung des Steuersignals in einfacher und schneller Art und Weise erzielt werden. Hierzu kann der Nutzungswert auf Seiten des Cloud-Anbieters verursachte Aufwände wiedergeben, wie beispielsweise eine CPU-Auslastung, eine Speicherauslastung, einen CO2 Verbrauch oder auch finanzielle Aufwände in bspw. Euro oder US Dollar.

Das Beispiel gemäß Figur 1 zeigt die Verwendung der Erfindung für 2 Cloud-Anbieter mit einem drei-dimensionalen Eingabesignal, d.h. drei Parameter, für den ersten Betriebsparameter und ein zwei-dimensionales Ausgabesignal für den zweiten Betriebsparameter. Diese konkrete Ausgestaltung ist lediglich beispielhaft zu verstehen und kann auch in anderer Konfiguration die Erfindung ausgestalten.

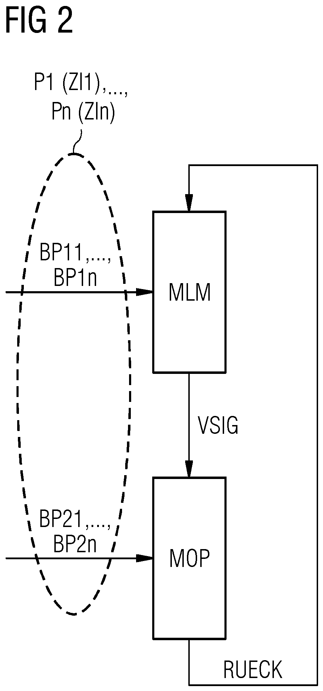

Im Ausführungsbeispiel gemäß Figur 1 wurde als Maschinenlernmodul MLM ein bereits trainiertes Modul angenommen. Anhand von Figur 2 wird exemplarisch erläutert, wie das Maschinenlernmodul trainiert wird. Das Maschinenlernmodul weist eine vernetzte mehrstufige Struktur mit einer Vielzahl von Neuronen auf, wobei einige der Neuronen noch eine Entscheidungseinheit zum Auswerten und Weiterleiten eines Ausgangssignals des jeweiligen Neurons aufweisen können. In einem bestehenden und betriebenen technischen System, wie beispielsweise der Förderanlage, werden die ersten und zweiten Betriebsparameter laufend gesammelt. Die ersten Betriebsparameter können pro Zeitintervall aus dem konkreten Betrieb des technischen Systems entnommen werden. Die zweiten Betriebsparameter liefert beispielsweise der Cloud-Anbieter nach Ablauf des Zeitintervalls als Rückmeldung an den Betreiber des technischen Systems. Die jeweiligen ersten und zweiten Betriebsparameter pro jeweiligem Zeitintervall können als Test- und/oder Verifikationsparameter für das Trainieren des Maschinenlernmodul verstanden werden. Diese Test- und/oder Verifikationsparameter können von mehreren verschiedenen technischen Systemen oder auch von einem technischen System mit unterschiedlichen Konfigurationen der jeweiligen Produktionsmodule stammen.

Im Rahmen des Trainierens des Maschinenlernmoduls werden dem Maschinenlernmodul jeweils der ersten Betriebsparameter BP1 zugeführt, wobei das Maschinenlernmodul hieraus jeweils ein Vorhersagesignal VSIG erzeugt, welches den prognostizierten zweiten Betriebsparameter repräsentiert. Ein Optimierungsmodul MOP ermittelt einen jeweiligen Fehler bzw. Abweichung zwischen dem Vorhersagesignal VSIG und dem jeweiligen zweiten Betriebsparameter BP21, wobei die Paare aus ersten und zweiten Betriebsparametern als ein Satz an Test- und/oder Verifikationsparametern verstanden werden können. Hieraus wird ein Rückkoppelsignal RUECK erzeugt, z.B. welches jeweilige Gewichte für Neuronen des Maschinenlernmoduls zur Minimierung eines Gesamtfehlers/Gesamtabweichung aufweist. Die Gewichte zwischen den Neuronen des Maschinenlernmoduls werden nachfolgend auf Basis des Rückkoppelsignals optimiert. In der Praxis können mehrere zehntausend Paare an ersten und zweiten Betriebsparametern zum Training genutzt werden, damit ein Vorhersagefehler des Vorhersagesignals minimiert werden kann.

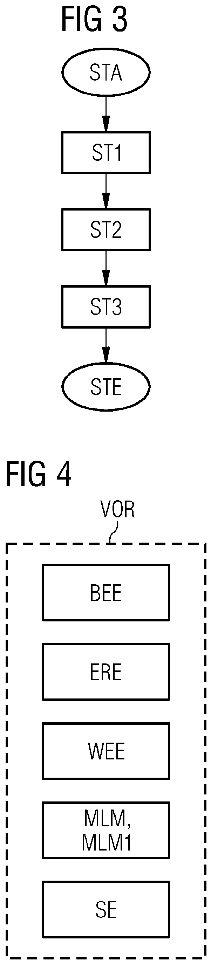

Figur 3 zeigt ein Ablaufdiagram der vorliegenden Erfindung, das folgende Schritte aufzeigt:
- STA:: Im Schritt STA startet das Ablaufdiagramm;
- ST1:: Im Schritt ST1 wird zumindest ein Paar aufweisend jeweils erste Betriebsparameter und jeweils zweite Betriebsparameter für ein jeweiliges Intervall bereitgestellt;
- ST2:: Im Schritt ST2 wird ein Maschinenlernmodul bereitgestellt, das durch das zumindest eine Paar mit dem jeweiligen ersten Betriebsparameter als Eingabesignal des Maschinenlernmoduls und dem jeweiligen zweiten Betriebsparameter als Ausgabesignal des Maschinenlernmoduls trainiert ist;
- ST3:: Im Schritt ST3 wird eine Steuereinrichtung derart konfiguriert, dass auf Basis des Vorhersagesignals ein Steuersignal der Steuereinrichtung zum Konfigurieren des technischen Systems und/oder zum Steuern des Betriebs des technischen Systems erzeugt wird;
- STE:: Im Schritt STE wird das Ablaufdiagramm beendet.

Figur 4 zeigt exemplarisch jeweilige Vorrichtungseinheiten der Vorrichtung VOR, wie die weitere Einheit WEE, die Ermittlungseinheit ERE, die Bereitstelleinheit BEE, die Steuereinrichtung SE und das Maschinenlernmodul MLM, MLM1 können in Software, Hardware oder in einer Kombination aus Soft- und Hardware ausgebildet sein.

Das erfinderische computerimplementierte Verfahren und die erfinderische Vorrichtung können für ein technisches System ausgebildet sein, das eine Produktionsanlage zur Fertigung eines Werkzeugs, einen Roboter zum Reinigen einer Fläche oder eine Steueranlage zur Steuerung einer Stromerzeugung in einem Kraftwerk wiedergibt.

### Literatur:

[1] Cloud Computing, Wikipedia, siehe https://en.wikipedia.org/wiki/Cloud_computing

## Patentansprüche

1. Computerimplementiertes Verfahren zum Konfigurieren einer Steuereinrichtung (SE) für ein technisches System (PROD), bei dem
- durch das technische System (PROD) zumindest ein Cloud-Dienst (CD1, CD2) zumindest eines Cloud-Anbieters (CA1, CA2) genutzt wird,
- durch einen jeweiligen ersten Betriebsparameter (BP11, ... BP1n, BP1x) eine jeweilige Konfiguration des technischen Systems (PROD) und/oder ein jeweiliges Verhalten des technischen Systems (PROD) im Betrieb charakterisiert wird, und
- durch einen jeweiligen zweiten Betriebsparameter (BP21, ... BP2n, BP2x) eine jeweilige Nutzung des zumindest einen Cloud-Dienstes (CD1, CD2) durch das technische System (PROD) charakterisiert wird,
mit folgenden Schritten:
a) Bereitstellen von zumindest einem Paar (P1, ..., Pn) aufweisend den jeweiligen ersten Betriebsparameter (BP11, ... BP1n) und den jeweiligen zweiten Betriebsparameter (BP21, ... BP2n) für ein jeweiliges Zeitintervall (ZI1, ..., ZIn);
b) Bereitstellen eines Maschinenlernmoduls (MLM), das durch das zumindest eine Paar (P1, ..., Pn) mit dem jeweiligen ersten Betriebsparameter (BP11, ... BP1n) als Eingabesignal des Maschinenlernmoduls (MLM) und dem jeweiligen zweiten Betriebsparameter (BP21, ... BP2n) als Ausgabesignal des Maschinenlernmoduls (MLM) trainiert ist;
c) Ermitteln zumindest eines Vorhersagesignals (VSIG) für den zweiten Betriebsparameter (BP2x) eines weiteren Zeitintervalls (ZIx) als Ausgabesignal des Maschinenlernmoduls (MLM) durch Vorgabe des ersten Betriebsparameters (BP1x) des weiteren Zeitintervalls (ZIx) als Eingabesignal des Maschinenlernmoduls (MLM);
d) Konfigurieren der Steuereinrichtung (SE) derart, dass auf Basis des Vorhersagesignals (VSIG) ein Steuersignal (SSIG) der Steuereinrichtung (SE) zur Konfiguration des technischen Systems (PROD) und/oder zum Steuern des Betriebs des technischen Systems (PROD) erzeugt wird.

2. Computerimplementiertes Verfahren nach Anspruch 1, bei dem zumindest einer der jeweiligen erste Betriebsparameter (BP11, ... BP1n) zumindest gemäß einer der folgenden Ausführungen bereitgestellt wird:
- Zumindest ein Projektierungsparameter des technischen Systems (PROD), der eine Projektierung des technischen Systems (PROD) charakterisiert;
- Zumindest ein Konfigurationsparameter des zumindest einen Cloud-Dienstes (CD1, CD2), der eine Parametrierung des zumindest einen Cloud-Dienstes (CD1, CD2) charakterisiert;
- Zumindest ein Zustandsparameter, der einen Zustand zumindest eines Teils von zumindest einer Einheit (PE1, PE2) des technischen Systems (PROD) während eines Betriebs des technischen Systems (PROD) bereitgestellt;
- Zumindest ein Betriebsparameter, der zumindest einen von mehreren Zuständen des Betriebs des technischen Systems (PROD) anzeigt;
- Zumindest ein Netzwerkparameter, der zumindest einen technischen Parameter zumindest einer Netzwerkkommunikation, insbesondere zwischen dem technischen System (PROD) und dem zumindest einen Cloud-Dienst (CD1, CD2) oder dem zumindest einen Cloud-Anbieter (CA1, CA2), anzeigt.

3. Computerimplementiertes Verfahren nach Anspruch 1 oder 2, bei dem zumindest einer der jeweiligen zweiten Betriebsparameter (BP21, ... BP2m) zumindest gemäß einer der folgenden Ausführungen bereitgestellt wird:
- Übertragenes Datenvolumen zwischen dem technischen System (PROD) und dem zumindest einen Cloud-Dienst (CD1, CD2) oder Cloud-Anbieter (CA1, CA2);
- Reaktionszeit zwischen Anfrage bei zumindest einem der Cloud-Dienste (CD1) durch das technische System (PROD) und Antwort durch den Cloud-Dienst (CD1);
- Anzahl an gestellten Anfragen an einen oder mehrere der Cloud-Dienste (CD1, CD2);
- Rechenleistung auf Seiten des Cloud-Anbieters (CA1, CA2), insbesondere CPU-Last, Auslastung eines Arbeitsspeichers und/oder Auslastung einer virtualisierten Datenbank oder virtualisierten Festplatte;
- Energieverbrauch, insbesondere elektrischer Energieverbrauch, oder CO2-Ausstoß verursacht durch die Nutzung des zumindest einen Cloud-Dienstes (CD1, CD2) durch das technische System (PROD).

4. Computerimplementiertes Verfahren nach einem der vorhergehenden Ansprüche, bei dem ein oder mehrere der zweiten Betriebsparameter (BP21, ... BP2m) durch den zumindest einen Cloud-Anbieter (CA1, CA2) in vorgebbaren zeitlichen Abständen bereitgestellt wird.

5. Computerimplementiertes Verfahren nach einem der vorhergehenden Ansprüche, bei dem das zumindest eine Vorhersagesignal (VSIG) mehrdimensional ausgestaltet ist und einen oder mehrere der zweiten Betriebsparameter (BP21, ... BP2m) aufweist.

6. Computerimplementiertes Verfahren nach einem der vorhergehenden Ansprüche, bei dem auf Basis des zumindest einen Vorhersagesignals (VSIG) ein Nutzungswert (NW) bereitgestellt wird, der durch eine gewichtete Verknüpfung, insbesondere als Summation, einzelner Parameter des Vorhersagesignals (VSIG) erzeugt wird.

7. Computerimplementiertes Verfahren nach einem der vorhergehenden Ansprüche, bei dem für den jeweiligen Cloud-Anbieter (CA1, CA2) ein jeweiliges Maschinenlernmodul (MLM, MLM1) trainiert oder ein Maschinenlernmodul (MLM) für mehrere Cloud-Anbieter (CA1, CA2) trainiert werden.

8. Computerimplementiertes Verfahren nach einem der vorhergehenden Ansprüche, bei dem durch die Steuereinrichtung (SE) für mehrere verschiedene erste Betriebsparameter (BP11, ..., BP1m) das jeweilige Vorhersagesignal (VSIG1, ..., VSIGm) ermittelt und mittels einer Auswahlvorschrift (RUL), die das jeweilige Vorhersagensignal (VSIG1, ..., VSIGm) berücksichtigt, insbesondere bei einem Unter- oder Überschreiten einer Schwelle für das jeweilige Vorhersagesignal (VSIG1, ..., VSIGm), das Steuersignal (SSIG) gebildet werden.

9. Computerimplementiertes Verfahren nach Anspruch 8, bei dem eines der jeweiligen Vorhersagesignale (VSIGm) ausgewählt und das Steuersignal (SSIG) auf Basis des zu dem ausgewählten Vorhersagesignal (VSIGm) gehörenden ersten Betriebsparameters (BP1m) gebildet werden.

10. Vorrichtung (VOR) zum Konfigurieren einer Steuereinrichtung (SE) für ein technisches System (PROD), bei dem
- durch das technische System (PROD) zumindest ein Cloud-Dienst (CD1, CD2) zumindest eines Cloud-Anbieters (CA1, CA2) genutzt wird,
- durch einen jeweiligen ersten Betriebsparameter (BP11, ... BP1n, BP1x) eine jeweilige Konfiguration des technischen Systems (PROD) und/oder ein jeweiliges Verhalten des technischen Systems (PROD) im Betrieb charakterisiert wird, und
- durch einen jeweiligen zweiten Betriebsparameter (BP21, ... BP2n, BP2x) eine jeweilige Nutzung des zumindest einen Cloud-Dienstes (CD1, CD2) durch das technische System (PROD) charakterisiert wird,
mit folgenden Einheiten:
a) Bereitstelleinheit (BEE) zum Bereitstellen von zumindest einem Paar (P1, ..., Pn) aufweisend den jeweiligen ersten Betriebsparameter (BP11, ... BP1n) und den jeweiligen zweiten Betriebsparameter (BP21, ... BP2n) für ein jeweiliges Zeitintervall (ZI1, ..., ZIn);
b) Maschinenlernmoduls (MLM), das durch das zumindest eine Paar (P1, ..., Pn) mit dem jeweiligen ersten Betriebsparameter (BP11, ... BP1n) als Eingabesignal des Maschinenlernmoduls (MLM) und dem jeweiligen zweiten Betriebsparameter (BP21, ... BP2n) als Ausgabesignal des Maschinenlernmoduls (MLM) trainiert ist;
c) Ermittlungseinheit (ERE) zum Ermitteln zumindest eines Vorhersagesignals (VSIG) für den zweiten Betriebsparameter (BP2x) eines weiteren Zeitintervalls (ZIx) als Ausgabesignal des Maschinenlernmoduls (MLM) durch Vorgabe des ersten Betriebsparameters (BP1x) des weiteren Zeitintervalls (ZIx) als Eingabesignal des Maschinenlernmoduls (MLM);
d) Steuereinrichtung (SE), das derart konfiguriert ist, dass auf Basis des Vorhersagesignals (VSIG) ein Steuersignal (SSIG) der Steuereinrichtung (SE) zur Konfiguration des technischen Systems (PROD) und/oder zum Steuern des Betriebs des technischen Systems (PROD) erzeugbar ist.

11. Vorrichtung (VOR) nach Anspruch 10,
bei der die Vorrichtung (VOR) ferner eine weitere Einheit (WEE) aufweist, die dazu eingerichtet ist, zumindest einen der Schritte gemäß einem der Ansprüche 2 bis 9 zu implementieren und auszuführen.

12. Verwendung des computerimplementierten Verfahrens nach einem der Ansprüche 1 bis 9, bei dem mit Hilfe des computerimplementierten Verfahrens eine Optimierung des technischen Systems (PROD) bei seiner Konfiguration und/oder während seines Betriebs in Bezug auf (i) eine Auslastung einzelner Einheiten des technischen Systems (PROD), (ii) eine Nutzung einzelner oder mehrerer Cloud-Dienste (CD1, CD2) durch das technische System (PROD) und/oder (iii) einen Wechsel eines einzelnen Cloud-Dienstes (CD1) von einem ersten Cloud-Anbieter (CA1) auf einen zweiten Cloud-Anbieter (CA2) durchführbar ist.
